# EUROPEAN PATENT SPECIFICATION

(11) **EP 2 983 235 B1**
(45) Date of publication and mention of the grant of the patent: **03.01.2018**
(21) Application number: 14775855.1
(22) Date of filing: 26.03.2014
(51) Int. Cl.: H01M 10/0585, H01M 4/62, H01M 4/13, H01M 10/0525, H01M 4/133, H01M 4/02

(54) **NONAQUEOUS ELECTROLYTE SECONDARY BATTERY**
SEKUNDÄRBATTERIE MIT WASSERFREIEM ELEKTROLYT
BATTERIE SECONDAIRE À ÉLECTROLYTE NON AQUEUX

(30) Priority: 26.03.2013 JP 2013065019
(43) Date of publication of application: 10.02.2016
(73) Proprietor: NISSAN MOTOR CO., LTD., Yokohama-shi, Kanagawa 220-8623 (JP)
(72) Inventor: OGAWA, Hiroshi, Atsugi-shi Kanagawa 243-0123 (JP); HONDA, Takashi, Atsugi-shi Kanagawa 243-0123 (JP); HAGIYAMA, Kosuke, Atsugi-shi Kanagawa 243-0123 (JP); YAMAGUCHI, Ryuuta, Atsugi-shi Kanagawa 243-0123 (JP)
(74) Representative: Grünecker Patent- und Rechtsanwälte PartG mbB
(86) International application number: PCT/JP2014/058686
(87) International publication number: WO 2014/157418

(56) References cited:
- EP-A1- 1 798 790
- EP-A1- 2 975 680
- WO-A1-98/38688
- WO-A1-2010/146832
- JP-A- 2004 071 290
- JP-A- 2009 054 462
- US-A1- 2004 106 038

## Description

### Technical Field

The present invention relates to a non-aqueous electrolyte secondary battery.

### Background Art

In recent years, developments of electric vehicles (EV), hybrid electric vehicles (HEV) and fuel cell vehicles (FCV) have been advanced against the background of escalating environmental protection movement. For a power source for driving motors used on those vehicles, a rechargeable secondary battery is suitable. In particular, what is attracting the attention is a non-aqueous electrolyte secondary battery such as a lithium-ion secondary battery expected to provide high capacity and high output.

In general, a non-aqueous electrolyte secondary battery includes a battery element prepared by laminating a positive electrode having a positive electrode active material layer including a positive electrode active material (for example, a lithium-transition metal composite oxide, and the like) and a negative electrode having a negative electrode active material layer including a negative electrode active material (for example, a carbonaceous material such as graphite), having a separator therebetween.

A binder for binding an active material used for an active material layer is classified into an organic solvent-based binder (the binder that is not dissolved/dispersed in water, but is dissolved/dispersed in an organic solvent) and an aqueous binder (the binder that is dissolved/dispersed in water). The organic solvent-based binder is industrially unfavorable in some cases because the material cost, the recovery cost, and the waste disposal of an organic solvent entails great expense. Meanwhile, the aqueous binder has an advantage of lowering a burden on environment and greatly suppressing an investment on facilities of a production line, since water as a raw material is conveniently available and only water vapor is generated during drying. The aqueous binder also has an advantage that, since the aqueous binder has a high binding effect even with a small amount compared to an organic solvent-based binder, it can increase a ratio of an active material per same volume so that a negative electrode with high capacity can be achieved.

Because of having such an advantage, various attempts are being made to form a negative electrode using the aqueous binder such as a styrene-butadiene rubber (SBR) as a binder for binding an active material. However, when using the aqueous binder, it is difficult to obtain high peeling strength with a negative electrode current collector and a negative electrode active material layer. When the amount of a binder increases in order to increase the peeling strength, it is easy for the entire electrode to become hard and fragile.

In order to solve such problems, for example, Patent Document 1 discloses a method of improving adhesion property (peeling strength) with a negative electrode current collector and a negative electrode active material layer by using the combination of different kinds of aqueous binders in a negative electrode active material layer of a non-aqueous electrolyte secondary battery. Patent Document 2 discloses a negative electrode material with low irreversible capacity as well as improve cycle performance and liquid immersion properties. Patent Document 3 discloses flat laminated non-aqueous secondary batteries comprising negative electrode active materials having a rectangular shape.

### Citation List

### Patent Documents

Patent Document 1: JP 2010-080297 A
Patent Document 2: EP 1 798 790 A1
Patent Document 3: US 2004/106038 A1

### Summary of Invention

### Technical Problem

However, it is found that in order to apply a non-aqueous electrolyte secondary battery to a vehicle such as a hybrid vehicle or an electric vehicle, since vibration resistance is strictly required, and thus, it is necessary to further increase peeling strength, the method disclosed in Patent Document 1 is not sufficient.

Therefore, an object of the present invention is to provide a non-aqueous electrolyte secondary battery having high vibration resistance when using an aqueous binder as a binder for a negative electrode active material layer.

### Solution to Problem

The present inventors have endeavored to solve the problems mentioned above. As a consequence, they found that the problems could be solved by setting a ratio of a length of long side to a length of short side of a negative electrode active material layer for a flat laminated type non-aqueous electrolyte secondary battery to be 1.25 or less, and also by controlling the amount of aqueous binder in the negative electrode active material layer, a Young's modulus, a density of the negative electrode active material layer, a rated capacity , as well as a ratio of a battery area to rated capacity within predetermined range, and completed the present invention.

In other words, the present invention is a flat laminated type non-aqueous electrolyte secondary battery having a power generating element including: a positive electrode obtained by forming a positive electrode active material layer on a surface of a positive electrode current collector; a negative electrode obtained by forming a negative electrode active material layer on a surface of a negative electrode current collector; and a separator, wherein the negative electrode active material layer includes 2 to 4% by mass of an aqueous binder with respect to the total mass of the negative electrode active material layer, wherein the negative electrode active material layer has a rectangular shape, wherein a ratio of a length of long side to a length of short side of the rectangle is 1 to 1.25, wherein a Young's modulus of the negative electrode is 1.0 to 1.4 GPa, wherein a density of the negative electrode active material layer is 1.4 to 1.6 g/cm³, and wherein a ratio of a battery area (projected area of the battery including an outer casing of the battery) to rated capacity is 5 cm²/Ah or more and the rated capacity is 3 Ah or more.

### Brief Description of Drawing

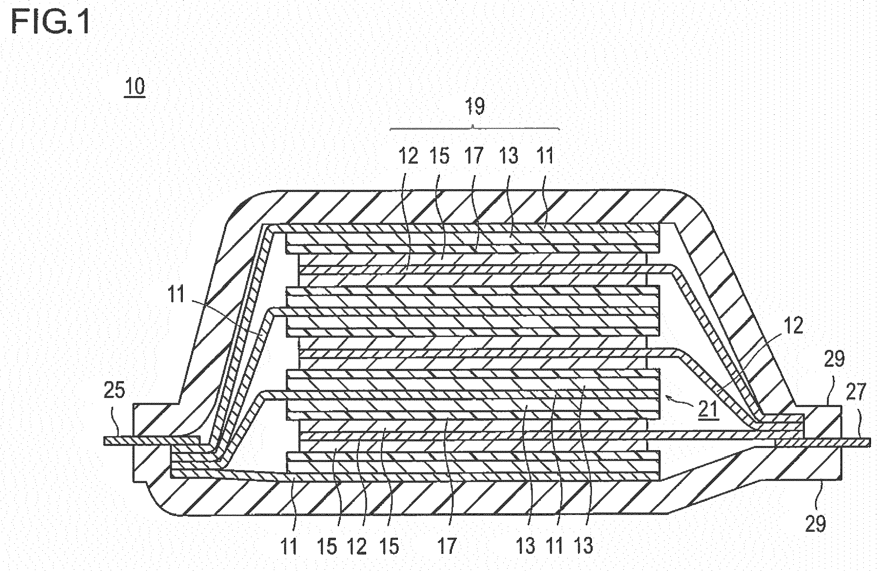

Fig. 1 is a cross-sectional view schematically illustrating the basic constitution of a non-aqueous electrolyte lithium ion secondary battery, in which the non-aqueous electrolyte lithium ion secondary battery is a flat type (stack type) but not a bipolar type, according to one embodiment of the present invention.

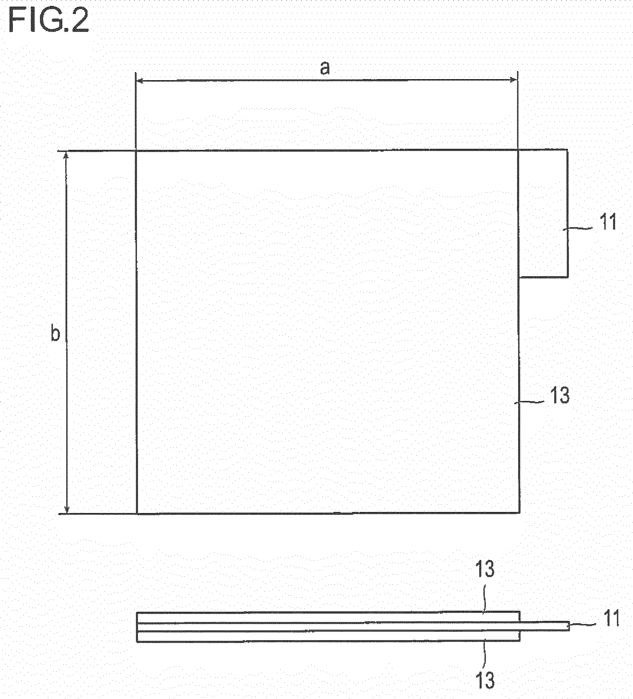

Fig. 2 is a view schematically illustrating a negative electrode to be used for a non-aqueous electrolyte secondary battery according to the present embodiment.

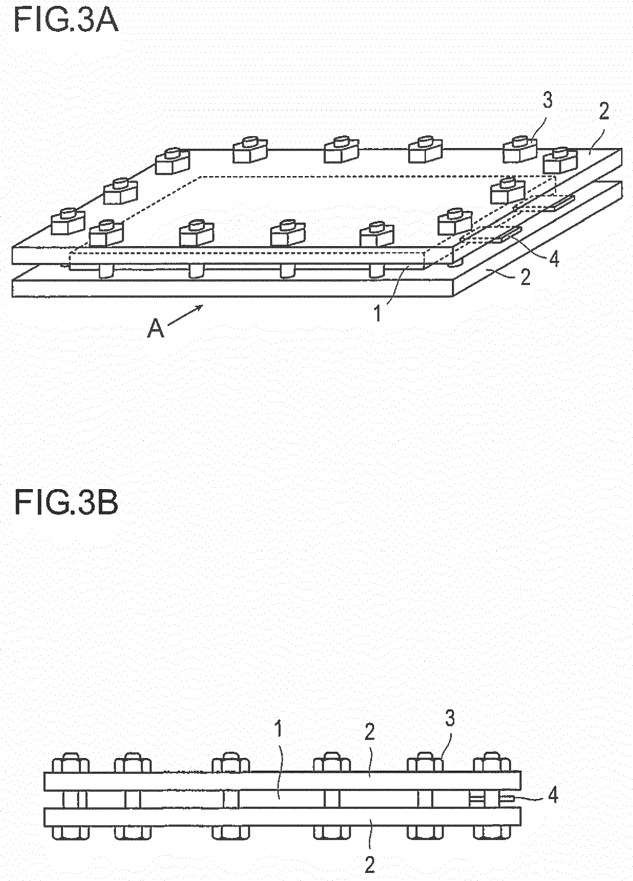

Fig. 3A is a plane view illustrating a non-aqueous electrolyte secondary battery according to one preferable embodiment of the present invention.
Fig. 3B is a fragmentary view taken from the arrow A of Fig. 3A.

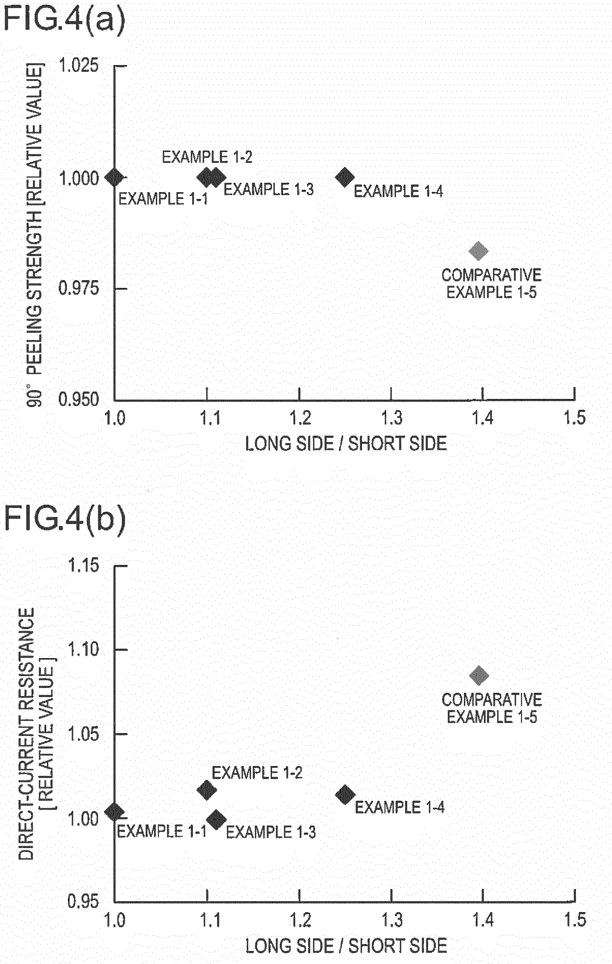

Fig. 4 is graphs illustrating (a) the relationship between the ratio of a length of long side to a length of short side of a negative electrode active material layer and the 90° peeling strength and (b) the relationship between a ratio of a length of long side to a length of short side of the negative electrode active material layer and the direct current resistance, of the battery manufactured in Examples.

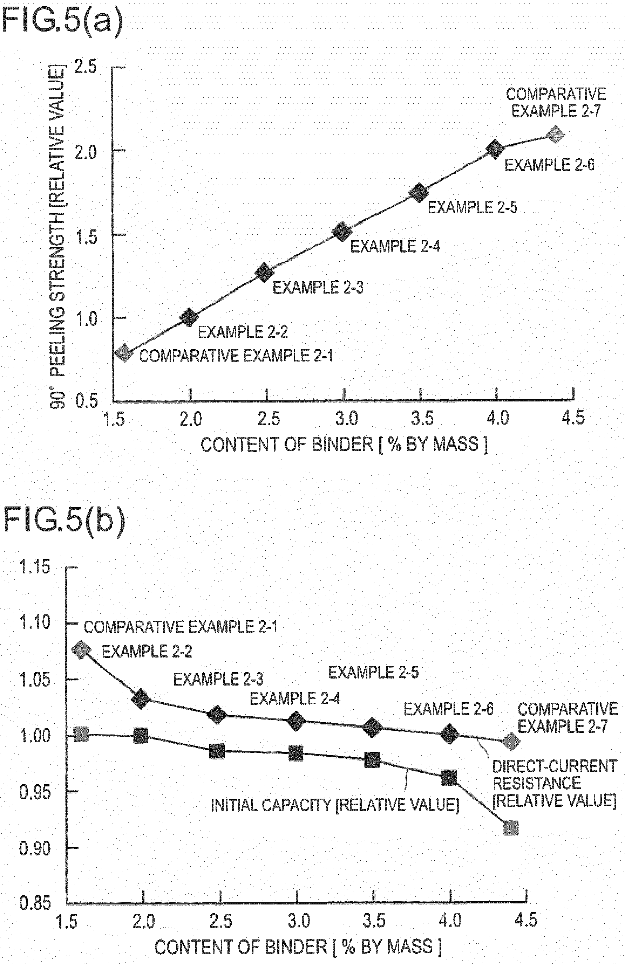

Fig. 5 is graphs illustrating (a) the relationship between the amount of aqueous binder included in a negative electrode active material layer and the 90° peeling strength and (b) the relationship between the amount of aqueous binder included in the negative electrode active material layer, and the direct current resistance and the initial capacity, of the battery manufactured in Examples.

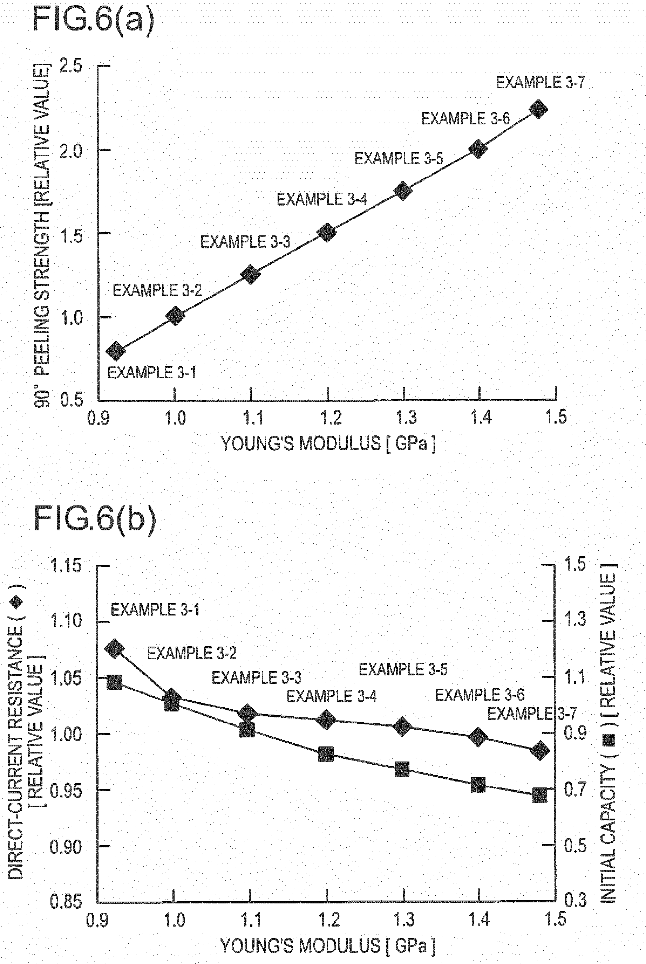

Fig. 6 is graphs illustrating (a) the relationship between the Young's modulus of a negative electrode and the 90° peeling strength and (b) the relationship between the Young's modules of a negative electrode, and the direct current resistance and the initial capacity, of the battery manufactured in Examples.

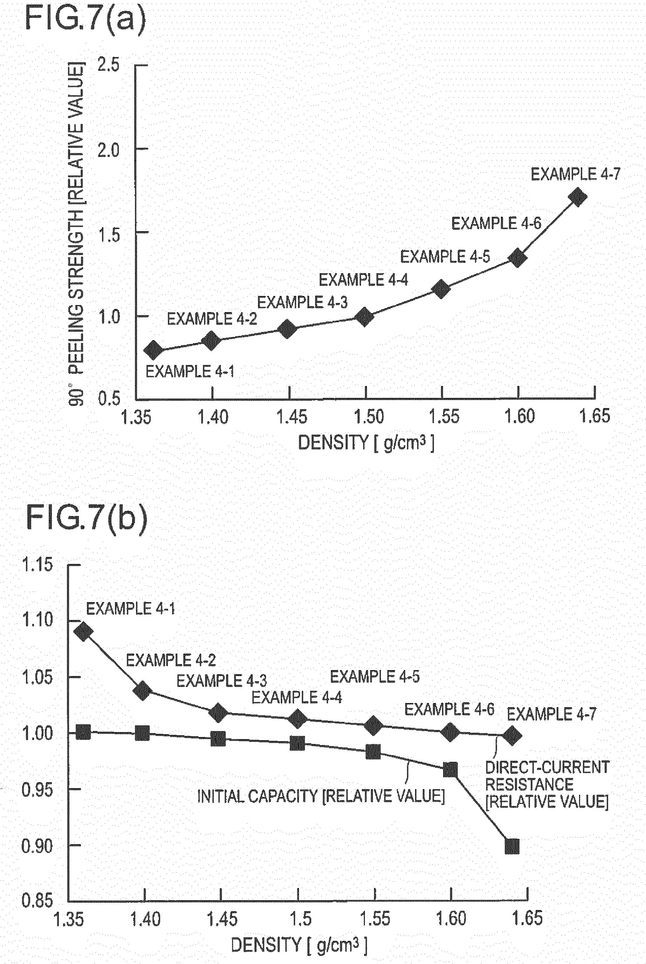

Fig. 7 is graphs illustrating (a) the relationship between the density of a negative electrode active material layer and the 90° peeling strength and (b) the relationship between the density of a negative electrode active material layer, and the direct current resistance and the initial capacity, of the battery manufactured in Examples.

### Description of Embodiments

The present invention relates to a flat laminated type non-aqueous electrolyte secondary battery having a power generating element including a positive electrode obtained by forming a positive electrode active material layer on the surface of a positive electrode current collector, a negative electrode obtained by forming a negative electrode active material layer on the surface of a negative electrode current collector, and a separator, in which the negative electrode active material layer includes 2 to 4% by mass of an aqueous binder with respect to the total mass of the negative electrode active material layer, wherein the negative electrode active material layer has a rectangular shape, wherein a ratio of a length of long side to a length of short side (long side/short side) of the rectangle is 1 to 1.25, wherein a Young's modulus of the negative electrode is 1.0 to 1.4 GPa, wherein a density of the negative electrode active material layer is 1.4 to 1.6 g/cm3, and wherein a ratio of a battery area (projected area of the battery including an outer casing of the battery) to rated capacity is 5 cm²/Ah or more and the rated capacity is 3 Ah or more.

According to the present invention, a current collector follows the expansion and shrinkage of a negative electrode active material layer by making a flat laminated type battery, and therefore, it is difficult to generate residual stress, and it is easy to allow the stress to be released into the surrounding area thereof by making an electrode to have the shape that is close to square. In addition, by setting the content of an aqueous binder to be a specific value, it is possible to secure a high binding property. For this reason, the peeling strength with a negative electrode current collector and a negative electrode active material layer are improved, and therefore, a battery having high vibration resistance may be obtained.

As described above, since an aqueous binder may use water as a solvent at the time of manufacturing an active material layer, there are various advantages. In addition, even the small amount of the aqueous binder may allow an active material to be bound, as compared with an organic solvent-based binder.

However, strong vibration is given to a non-aqueous electrolyte secondary battery to be used as a power supply for operating the motor of a vehicle, and thus, as compared with the public non-aqueous electrolyte secondary battery used for a cellular phone, a note book computer or the like, vibration resistance and life cycle for a long period of time are strictly required for the non-aqueous electrolyte secondary battery.

When the amount of an aqueous binder in a negative electrode active material layer is increased in order to increase vibration resistance, the binding property of the negative electrode active material layer increases, and therefore, the peeling strength between a negative electrode current collector and a negative electrode active material layer may be increased. However, when the amount of an aqueous binder is too much, it is easy for an electrode to become hard and fragile, thereby reducing vibration resistance thereof. Especially, for a wound-typed battery, high residual stress is easily generated for the expansion and shrinkage of a negative electrode active material layer, which comes with the charge and discharge of a battery, and the electrode is deformed and broken in some cases.

However, the battery according to the present embodiment is a flat laminated type battery, and thus, it is easy for a current collector to follow the expansion and shrinkage of a negative electrode active material layer, which comes with the charge and discharge of a battery, and also, it is difficult to deform an electrode. Therefore, it is difficult to generate residual stress in the electrode. In addition, the shape of an electrode is allowed to have the shape to be close to square, and thus, it is possible to allow the stress to be easily released into the surrounding area thereof. For this reason, it is possible to obtain high peeling strength with a negative electrode active material and a current collector. In addition, by controlling the amount of aqueous binder in the specific value, it is possible to secure binding strength and also to suppress the breaking of an electrode. As a result, it is possible to obtain a high performance non-aqueous electrolyte secondary battery which has the high binding property of a negative electrode and can be applied as a battery for a vehicle which gets strong vibration.

Next, a description will be made of a non-aqueous electrolyte lithium ion secondary battery as a preferred embodiment of the non-aqueous electrolyte secondary battery, but it is not limited thereto. Meanwhile, the same elements are given with the same symbols for the descriptions of the drawings, and overlapped descriptions are omitted. Further, note that dimensional ratios in the drawings are exaggerated for the description, and are different from actual ratios in some cases.

Fig. 1 is a cross-sectional view schematically illustrating the basic constitution of a non-aqueous electrolyte lithium ion secondary battery which is a flat type (stack type) and not a bipolar type (hereinbelow, it is also simply referred to as a "stack type battery"). As illustrated in Fig. 1, the stack type battery 10 according to this embodiment has a structure in which a power generating element 21 with a substantially rectangular shape, in which a charge and discharge reaction actually occurs, is sealed inside of a battery outer casing material 29 as an outer casing. Herein, the power generating element 21 has a constitution in which a positive electrode, the separator 17, and a negative electrode are stacked. Meanwhile, the separator 17 has a non-aqueous electrolyte (for example, liquid electrolyte) therein. The positive electrode has a structure in which the positive electrode active material layer 15 is disposed on both surfaces of the positive electrode current collector 12. The negative electrode has a structure in which the negative electrode active material layer 13 is disposed on both surfaces of the negative electrode current collector 11. Specifically, one positive electrode active material layer 15 and the neighboring negative electrode active material layer 13 are disposed to face each other via the separator 17, and the negative electrode, the electrolyte layer, and the positive electrode are stacked in this order. Accordingly, the neighboring positive electrode, electrolyte layer and negative electrode form one single battery layer 19. It can be also said that, as plural single barrier layers 19 are stacked, the stack type battery 10 illustrated in Fig. 1 has a constitution in which electrically parallel connection is made among them.

Meanwhile, on the outermost layer negative electrode current collector which is present on both outermost layers of the power generating element 21, the negative electrode active material layer 13 is disposed only on a single surface. However, an active material layer may be formed on both surfaces. Namely, not only a current collector exclusive for an outermost layer in which an active material layer is formed on a single surface can be achieved but also a current collector having an active material layer on both surfaces can be directly used as a current collector of an outermost layer. Furthermore, by reversing the arrangement of the positive electrode and negative electrode of Fig. 1, it is also possible that the outermost layer positive electrode current collector is disposed on both outermost layers of the power generating element 21 and a positive electrode active material layer is disposed on a single surface or both surfaces of the same outermost layer positive electrode current collector.

The positive electrode current collector 12 and negative electrode current collector 11 have a structure in which each of the positive electrode current collecting plate (tab) 27 and negative electrode current collecting plate (tab) 25, which conductively communicate with each electrode (positive electrode and negative electrode), is attached and inserted to the end part of the battery outer casing material 29 so as to be led to the outside of the battery outer casing material 29. If necessary, each of the positive electrode current collecting plate 27 and negative electrode current collecting plate 25 can be attached, via a positive electrode lead and negative electrode lead (not illustrated), to the positive electrode current collector 12 and negative electrode current collector 11 of each electrode by ultrasonic welding or resistance welding.

Meanwhile, although a stack type battery which is a flat type (stack type), not a bipolar type is illustrated in Fig. 1, it can be also a bipolar type battery containing a bipolar type electrode which has a positive electrode active material layer electrically bound to one surface of a current collector and a negative electrode active material layer electrically bound to the opposite surface of the current collector. In that case, one current collector plays both roles of a positive electrode current collector and a negative electrode current collector.

Hereinbelow, each member is described in more detail.

### [Negative electrode]

A negative electrode is constituted by forming a negative electrode active material layer on the surface of a negative electrode current collector. The negative electrode to be used for the non-aqueous electrolyte secondary battery of the present embodiment is formed in the shape of rectangle, in which the negative electrode active material layer 13 on the surface of the negative electrode current collector 11 has the long side of the length a and the short side of the length b, as illustrated in Fig. 2.

The non-aqueous electrolyte secondary battery of the present embodiment has preferably 100 mm or more of the length b of each of the short sides of the negative electrode active material layer. Such a large-sized battery may achieve high capacity and high output, and thus, may be used for a vehicle. For the battery of the present embodiment, the peeling strength against residual stress generated by the expansion and shrinkage of a negative electrode active material layer, which comes with the charge and discharge of a battery, is secured, but as the size of an electrode becomes large, the electrode is vulnerable to the influences of being bent. Therefore, especially, the significant effect may be obtained for a large-size battery. The upper limit of the length of the short side of a negative electrode active material layer is not particularly limited, but is generally 400 mm or less.

In addition, for the battery of the present embodiment, a ratio (a/b) of a length of long side to a length of short side of each of the negative electrode active material layers is 1 to 1.25. When the ratio of a length of long side to a length of short side is higher than 1.25, residual stress is generated in the direction of the major axis, and a binding property is decreased. In addition, for this reason, cell resistance is increased, and therefore, the initial capacity of the battery is reduced. The ratio of a length of long side to a length of short side of a negative electrode active material layer is preferably close to 1, and preferably 1 to 1.1 and more preferably 1 to 1.05.

The Young's modulus of each of the negative electrodes is 1.0 to 1.4 GPa, and preferably 1.1 to 1.3 GPa. By setting the Young's modulus of the negative electrode to be 1.0 GPa or more, it is possible to secure the strength against the deformation of a negative electrode. For this reason, the peeling strength is improved, and thus, it is possible to obtain a high performance battery capable of being used even under the condition of strong vibration. In addition, when the Young's modulus of a negative electrode is 1.4 GPa or less, it is possible to obtain a high performance battery with high capacity. The Young's modulus of a negative electrode may be controlled by controlling the type or amount of an aqueous binder. For example, by using a binder having many cross-linking points such as a rubber-based binder, even when a negative electrode extends by external force, the negative electrode may return to normal. In addition, the Young's modulus of a negative electrode can be obtained by a method described in Examples.

Preferably, a 90° peeling strength of a negative electrode current collector from a negative electrode active material layer for each of the negative electrodes is 30 N/m or more, and more preferably 50 N/m or more. Within the above range, it is possible to obtain a battery having high vibration resistance, and therefore, the battery may be suitably used as a battery for a vehicle, which receives strong vibration. The upper limit of the 90° peeling strength for a negative electrode is not particularly limited, but for example, 70 N/m or less.

Hereinafter, each of the members will be described in more detail.

### [Negative electrode active material layer]

The negative electrode active material layer contains a negative electrode active material. Examples of the negative electrode active material include a carbon material such as graphite, soft carbon, and hard carbon, a lithium-transition metal composite oxide (for example, Li₄Ti₅O₁₂), a metal material, and a lithium alloy-based negative electrode material. If necessary, two or more kinds of a negative electrode active material may be used in combination. Preferably, from the viewpoint of capacity and output characteristics, a carbon material or a lithium-transition metal composite oxide is used as a negative electrode active material. Meanwhile, it is needless to say that a negative electrode active material other than those described above can be also used.

The average particle diameter of each active material contained in the negative electrode active material layer is, although not particularly limited, preferably 1 to 100 µm, and more preferably 1 to 30 µm from the viewpoint of having high output.

The negative electrode active material layer includes at least an aqueous binder. Meanwhile, the aqueous binder has an advantage of lowering a burden on environment and greatly suppressing an investment on facilities of a production line, since water as a raw material is conveniently available and only water vapor is generated during drying. In addition, there is no need to use a high-priced organic solvent in order to dissolve or disperse a binder, and therefore, a cost reduction may be achieved.

The amount of an aqueous binder included in the negative electrode active material layer of the battery of the present embodiment is 2 to 4% by mass with respect to the total mass of the negative electrode active material layer. When the amount of an aqueous binder is less than 2% by mass, the sufficient binding property cannot be secured, and thus, high vibration resistance cannot be obtained. When the amount of an aqueous binder exceeds 4% by mass, and particularly, the binder of a cross-linking polymer such as SBR is included, the entire electrode becomes hard and fragile, thereby reducing vibration resistance. In addition, the performance of a battery is reduced. More preferably, the amount of an aqueous binder in a negative electrode active material layer is 2.5 to 3.5% by mass.

Among the binders used in a negative electrode active material layer, the content of an aqueous binder is preferably 80 to 100% by mass, preferably 90 to 100% by mass, and preferably 100% by mass. As a binder other than an aqueous binder, there may be the binders used for the following positive electrode active material layer.

The aqueous binder indicates a binder with which water is used as a solvent or a dispersion medium, and specific examples thereof include a thermoplastic resin, a polymer with rubber elasticity, a water soluble polymer, and a mixture thereof. Herein, the binder with which water is used as a dispersion medium includes all expressed as latex or an emulsion, and it indicates a polymer emulsified in water or suspended in water. Examples thereof include a polymer latex obtained by emulsion polymerization in a self-emulsifying system.

Specific examples of the aqueous binder include a styrene polymer (styrene-butadiene rubber, styrene-vinyl acetate copolymer, styrene-acrylic copolymer or the like), acrylonitrile-butadiene rubber, methyl methacrylate -butadiene rubber, (meth)acrylic polymer (polyethylacrylate, polyethylmethacrylate, polypropylacrylate, polymethylmethacrylate (methyl methacrylate rubber), polypropylmethacrylate, polyisopropylacrylate, polyisopropylmethacrylate, polybutylacrylate, polybutylmethacrylate, polyhexylacrylate, polyhexylmethacrylate, polyethylhexylacrylate, polyethylhexylmethacrylate, polylaurylacrylate, polylaurylmethacrylate, or the like), polytetrafluoroethylene, polyethylene, polypropylene, ethylene-propylene copolymer, polybutadiene, butyl rubber, fluororubber, polyethylene oxide, polyepichlorohydrin, polyphosphazene, polyacrylonitrile, polystyrene, ethylene-propylene-diene copolymer, polyvinylpyridine, chlorosulfonated polyethylene, a polyester resin, a phenol resin, an epoxy resin; polyvinyl alcohol (average polymerization degree is preferably 200 to 4,000, and more preferably 1,000 to 3,000, and saponification degree is preferably 80% by mol or more, and more preferably 90% by mol or more) and a modified product thereof (1 to 80% by mol saponified product in a vinyl acetate unit of a copolymer with ethylene/vinyl acetate = 2/98 to 30/70 (molar ratio), 1 to 50% by mol partially acetalized product of polyvinyl alcohol, or the like), starch and a modified product thereof (oxidized starch, phosphoric acid esterified starch, cationized starch, or the like), cellulose derivatives (carboxymethyl cellulose, methyl cellulose, hydroxypropyl cellulose, hydroxyethyl cellulose, and a salt thereof), polyvinylpyrrolidone, polyacrylic acid (salt), polyethylene gylcol, copolymer of (meth)acrylamide and/or (meth)acrylic acid salt [(meth)acrylamide polymer, (meth)acrylamide-(meth) acrylic acid salt copolymer, (meth) acrylic acid alkyl (carbon atom number of 1 to 4) ester-(meth) acrylic acid salt copolymer, or the like], styrene-maleic acid salt copolymer, mannich modified product of polyacrylamide, formalin condensation type resin (urea-formalin resin, melamin-formalin resin or the like), polyamidepolyamine or dialkylamine-epichlorohydrin copolymer, polyethyleneimine, casein, soybean protein, synthetic protein, and a water soluble polymer such as galactomannan derivatives. The aqueous binder can be used either singly or in combination of two or more types.

From the viewpoint of a binding property, the aqueous binder preferably contains at least one rubber-based binder which is selected from the group consisting of styrene-butadiene rubber, acrylonitrile-butadiene rubber, methyl methacrylate-butadiene rubber, and methyl methacrylate rubber. In addition, from the viewpoint of having a good binding property, it is preferable that an aqueous binder include a styrene-butadiene rubber.

When a rubber-based binder such as a styrene-butadiene rubber, is used as an aqueous binder, the water-soluble polymer is preferably used in combination from the viewpoint of improving the coating property. Examples of the water-soluble polymer, which is suitably used in combination with the styrene-butadiene rubber, may include polyvinyl alcohol and a modified product thereof, starch and a modified product thereof, cellulose derivatives (carboxymethyl cellulose, methyl cellulose, hydroxyethyl cellulose, and a salt thereof), polyvinylpyrrolidone, polyacrylic acid (polyacrylate), and polyethylene glycol. For the battery of the present embodiment, the cellulose derivatives give a suitable thickening effect in the process of manufacturing a negative electrode, and thus, may form the negative electrode active material layer with a flat and smooth surface. Therefore, the cellulose derivatives may be preferably used. Among them, a styrene-butadiene rubber and carboxymethyl cellulose are preferably used in combination as a binder.

The amount of a rubber-based binder included in the negative electrode active material layer of the battery of the present embodiment is not particularly limited, but preferably 0.5 to 3.5% by mass and more preferably 1.5 to 2.5% by mass with respect to the total mass of the negative electrode active material layer. When the content of a rubber-based binder is 1% by mass or more, it is possible to obtain a high binding property for a negative electrode active material layer, and thus, it is possible to obtain high peeling strength with a negative electrode current collector and a negative electrode active material layer. In addition, when the amount of a rubber-based binder is 4% by mass or less, it may be prevented that it is easy for an electrode to become hard and fragile.

The amount of a water-soluble polymer included in the negative electrode active material layer of the battery of the present embodiment is not particularly limited, but for example, 0.5 to 3.5% by mass and more preferably 1 to 2% by mass with respect to the total mass of the negative electrode active material layer. When the content of a cellulose derivative is within the above range, it is possible to obtain excellent thickening effect in the process of manufacturing a negative electrode, and therefore, it is possible to properly control the viscosity of the slurry of the negative electrode active material.

The mass ratio of the contents of a rubber-based binder (for example, a styrene-butadiene rubber) and a water-soluble polymer (for example, a cellulose derivative) is not particularly limited, but the rubber-based binder: water-soluble polymer is preferably 1 : 0.3 to 1.6, more preferably 1 : 0.2 to 0.8, and still more preferably 1 : 0.4 to 0.6. When it is within the above range, it is suitable from the viewpoint of securing the dispersibility or binding strength of a binder.

If necessary, the negative electrode active material layer further contains other additives such as a conductive aid, an electrolyte (for example, polymer matrix, ion conductive polymer, and electrolyte solution), and lithium salt for enhancing ion conductivity.

The conductive aid means an additive which is blended in order to enhance the conductivity of the positive electrode active material layer or negative electrode active material layer. As the conductive aid, for example, there can be mentioned carbon materials such as carbon black including acetylene black; graphite; and carbon fiber. When the active material layer contains a conductive aid, an electron network is formed effectively in the inside of the active material layer, and it can contribute to improvement of the output characteristics of a battery.

Examples of the electrolyte salt (lithium salt) include Li(C₂F₅SO₂)₂N, LiPF₆, LiBF₄, LiClO₄, LiAsF₆, and LiCF₃SO₃.

Examples of the ion conductive polymer include polyethylene oxide (PEO)-based polymer and polypropylene oxide (PPO)-based polymer.

The mixing ratio of the components included in a negative electrode active material layer, other than the aqueous binder mentioned above, may be adjusted by properly referring to the known knowledge about a lithium ion secondary battery.

The density of a negative electrode active material layer is 1.4 to 1.6 g/cm³. When the density of a negative electrode active material layer is 1.4 g/cm³ or more, the peeling strength of a negative electrode is improved, and thus, it is difficult to increase resistance, thereby obtaining a high performance battery. In addition, when the density of a negative electrode active material layer is 1.6 g/cm³ or less, the sufficient communication property of a negative electrode active material may be obtained, and an electrolyte is easily penetrated. Therefore, it is possible to improve the performance of a battery such as initial capacity and cycle durability. The density of a negative electrode active material layer is preferably 1.45 to 1.55 g/cm³, because the effect of the present invention may be further exhibited. In addition, the density of a negative electrode active material layer refers to the mass of the active material layer per a unit volume. Specifically, a negative electrode active material layer is taken out from a battery, and then, a solvent and the like that are in an electrolyte are removed. Then, the volume of an active material layer is obtained from the long side, short side, and height thereof, and the weight of the active material layer is measured. After that, the density of the negative electrode active material layer may be obtained by dividing the weight by the volume.

### [Current collector (negative electrode current collector)]

The material constituting a current collector is not particularly limited, but a metal is preferably used.

Specific examples of the metal include aluminum, nickel, iron, stainless, titan, copper, and other alloys. In addition to them, a clad material of a nickel and aluminum, a clad material of copper and aluminum, or a plating material of a combination of those metals may be preferably used. It may be also a foil obtained by coating aluminum on a metal surface. Among them, from the viewpoint of electron conductivity or potential for operating a battery, aluminum, stainless, and copper are preferable.

The size of the current collector is determined based on use of a battery. When it is used for a large-size battery which requires high energy density, for example, a current collector with large area is used. The battery of the present embodiment uses preferably the current collector with the length of the short side of 100 mm or more, because the length of the short side of a negative electrode active material layer is 100 mm or more. The thickness of the current collector is not particularly limited. The thickness of the current collector is generally about 1 to 100 µm.

The method of manufacturing a negative electrode is not particularly limited. For example, there may be used a method including preparing the slurry of a negative electrode active material by mixing the components constituting a negative electrode active material layer including a negative electrode active material and an aqueous binder and a water-based solvent that is a solvent for adjusting the viscosity of slurry; applying the slurry on the surface of a current collector; drying the slurry; and then, pressing.

A water-based solvent as a solvent for adjusting the viscosity of slurry is not particularly limited, but a water-based solvent that is conventionally known may be used. For example, water (pure water, ultrapure water, distilled water, ion-exchanged water, ground water, well water, service water (tap water), and the like) or a mixed solvent of water and alcohol (for example, ethyl alcohol, methyl alcohol, and isopropyl alcohol) may be used. However, the present embodiments are not limited thereto, and the water-based solvents that are conventionally known may be properly selected and used within a range in which the working effects of the present embodiments are not impaired.

The mixed amount of a water-based solvent is not particularly limited, and the proper amount of the water-based solvent may be mixed so as to have the viscosity of the slurry of a negative electrode active material in the desired range.

The basis weight at the time of applying the slurry of a negative electrode active material on a current collector is not particularly limited, but preferably 0.5 to 20 g/m² and more preferably 1 to 10 g/m². Within the above range, it is possible to obtain a negative electrode active material layer having a proper thickness. A coating method is not particularly limited, and for example, there may be a knife coater method, a gravure coater method, a screen printing method, a wire bar method, a die coater method, a reverse roll coater method, an ink jet method, a spray method, a roll coater method, and the like.

A method for drying the slurry of a negative electrode active material after being applied is not particularly limited, and for example, the method such as a warm-air drying, may be used. For example, a drying temperature is 30 to 100°C, and for example, a drying time is 2 seconds to 1 hour.

The thickness of the negative electrode active material layer thus obtained is not particularly limited, but for example, 2 to 100 µm.

### [Positive electrode]

For the positive electrode that is used for the non-aqueous electrolyte secondary battery of the present embodiment, a positive electrode active material layer is formed on the surface of a positive electrode current collector. A shape or size of a positive electrode is not particularly limited, but the positive electrode active material layer is preferably formed to have the shape, in which a short side is 100 mm or more and an aspect ratio is 1 to 1.25.

### [Positive electrode active material layer]

The positive electrode active material layer contains a positive electrode active material, and if necessary, it further contains other additives such as a conductive aid, a binder, an electrolyte (for example, polymer matrix, ion conductive polymer, and electrolyte solution), and lithium salt for enhancing ion conductivity.

The positive electrode active material layer contains a positive electrode active material. Examples of the positive electrode active material include a lithium-transition metal composite oxide such as LiMn₂O₄, LiCoO₂, LiNiO₂, Li(Ni-Mn-Co)O₂, or a compound in which part of the transition metals is replaced with other element, a lithium-transition metal phosphate compound, and a lithium-transition metal sulfate compound. Depending on the case, two or more kinds of a positive electrode active material can be used in combination. As a preferred example, a lithium-transition metal composite oxide is used as a positive electrode active material from the viewpoint of capacity and output characteristics. As a more preferred example, Li(Ni-Mn-Co)O₂ and a compound in which part of the transition metals is replaced with other element (hereinbelow, also simply referred to as the "NMC composite oxide") are used. The NMC composite oxide has a layered crystal structure in which a lithium atom layer and a transition metal (Mn, Ni, and Co are arranged with regularity) atom layer are alternately stacked via an oxygen atom layer, one Li atom is included per atom of transition metal M and an amount of extractable Li is twice the amount of spinel lithium manganese oxide, that is, as the supply ability is two times higher, it can have high capacity.

As described above, the NMC composite oxide includes a composite oxide in which part of transition metal elements are replaced with other metal element. In that case, examples of other element include Ti, Zr, Nb, W, P, Al, Mg, V, Ca, Sr, Cr, Fe, B, Ga, In, Si, Mo, Y, Sn, V, Cu, Ag, and Zn. Preferably, it is Ti, Zr, Nb, W, P, Al, Mg, V, Ca, Sr, or Cr. More preferably, it is Ti, Zr, P, Al, Mg, or Cr. From the viewpoint of improving the cycle characteristics, it is even more preferably Ti, Zr, Al, Mg, or Cr.

By having high theoretical discharge capacity, the NMC composite oxide preferably has a composition represented by General Formula (1) : LiₐNi_{b}MncCo_{d}MₓO₂ (with the proviso that, in the formula, a, b, c, d, and x satisfy 0.9 ≤ a ≤ 1.2, 0 <b <1, 0 <c ≤ 0.5, 0 <d ≤ 0.5, 0 ≤ x ≤ 0.3, and b + c + d = 1. M represents at least one element selected from Ti, Zr, Nb, W, P, Al, Mg, V, Ca, Sr, and Cr). Herein, a represents the atomic ratio of Li, b represents the atomic ratio of Ni, c represents the atomic ratio of Mn, d represents the atomic ratio of Co, and x represents the atomic ratio of M. From the viewpoint of the cycle characteristics, it is preferable that 0.4 ≤ b ≤ 0.6 in General Formula (1). Meanwhile, composition of each element can be measured by inductively coupled plasma (ICP) atomic emission spectrometry.

In general, from the viewpoint of improving purity and improving electron conductivity of a material, nickel (Ni), cobalt (Co) and manganese (Mn) are known to contribute to capacity and output characteristics. Ti or the like replaces part of transition metal in a crystal lattice. From the viewpoint of the cycle characteristics, it is preferable that part of transition element are replaced by other metal element, and it is preferable that 0 < x ≤ 0.3 in General Formula (1), in particular. By solid-dissolving at least one selected from the group consisting of Ti, Zr, Nb, W, P, Al, Mg, V, Ca, Sr and Cr, the crystal structure is stabilized so that a decrease in capacity of a battery is prevented even after repeated charge and discharge, and thus, it is believed that excellent cycle characteristics can be achieved.

As a more preferred embodiment, b, c, and d in General Formula (1) satisfy 0.44 ≤ b ≤ 0.51, 0.27 ≤ c ≤ 0.31, and 0.19 ≤ d ≤ 0.26 from the viewpoint of having excellent balance between capacity and durability.

Meanwhile, it is needless to say that a positive electrode active material other than those described above can be also used.

The average particle diameter of the positive electrode active material which is contained in the positive electrode active material layer is, although not particularly limited, preferably 1 to 100 µm, and more preferably 1 to 20 µm from the viewpoint of having high output.

A binder used for the positive electrode active material layer is not particularly limited and the following materials can be mentioned; thermoplastic polymers such as polyethylene, polypropylene, polyethylene terephthalate (PET), polyether nitrile, polyacrylonitrile, polyimide, polyamide, cellulose, carboxymethyl cellulose (CMC) and a salt thereof, an ethylene-vinyl acetate copolymer, polyvinyl chloride, styrene-butadiene rubber (SBR), isoprene rubber, butadiene rubber, ethylene-propylene rubber, an ethylene-propylene-diene copolymer, a styrene-butadiene-styrene block copolymer and a hydrogenated product thereof, and a styrene-isoprene-styrene block copolymer and a hydrogenated product thereof; fluorine resins such as polyvinylidene fluoride (PVdF), polytetrafluoroethylene (PTFE), a tetrafluoroethylene-hexafluoropropylene copolymer (FEP), a tetrafluoroethylene-perfluoroalkyl vinyl ether copolymer (PFA), an ethylene-tetrafluoroethylene copolymer (ETFE), polychlorotrifluoroethylene (PCTFE), an ethylene-chlorotrifluoroethylene copolymer (ECTFE), and polyvinyl fluoride (PVF); vinylidene fluoride-based fluorine rubber such as vinylidene fluoride-hexafluoropropylene-based fluorine rubber (VDF-HFP-based fluorine rubber), vinylidene fluoride-hexafluoropropylene-tetrafluoroethylene-based fluorine rubber (VDF-HFP-TEF-based fluorine rubber), vinylidene fluoride-pentafluoropropylene-based fluorine rubber (VDF-PFP-based fluorine rubber), vinylidene fluoride-pentafluoropropylene-tetrafluoroethylene-based fluorine rubber (VDF-PFT-TFE-based fluorine rubber), vinylidene fluoride-perfluoromethyl vinyl ether-tetrafluoroethylene-based fluorine rubber (VDF-PFMVE-TFE-based fluorine rubber), and vinylidene fluoride-chlorotrifluoroethylene -based fluorine rubber (VDF-CTFE-based fluorine rubber); an epoxy resin, and the like. These binders may be each used singly, or two or more thereof may be used in combination.

The amount of the binder included in a positive electrode active material layer is not particularly limited as long as the amount is allowed for an active material to be bound. Preferably, the amount of the binder is 0.5 to 15% by mass and more preferably 1 to 10% by mass with respect to the active material layer.

As other additives in addition to the binder, the same additives as the negative electrode active material layer described above may be used.

### [Current collector (positive electrode current collector)]

The description about the positive electrode current collector will not be provided because it is the same as the description about the negative electrode current collector that is an element for forming a negative electrode.

### [Separator (Electrolyte Layer)]

A separator has a function of maintaining an electrolyte to ensure lithium ion conductivity between a positive electrode and a negative electrode and also a function of a partition wall between the positive electrode and the negative electrode.

Examples of a separator shape include a porous sheet separator or a non-woven separator composed of a polymer or a fiber which absorbs and maintains the electrolyte. Preferably, the porosity of the separator is 40 to 65%.

As a porous sheet separator composed of a polymer or a fiber, a microporous (microporous membrane) separator can be used, for example. Specific examples of the porous sheet composed of a polymer or a fiber include a microporous (microporous membrane) separator which is composed of polyolefin such as polyethylene (PE) and polypropylene (PP) ; a laminate in which plural of them are laminated (for example, a laminate with three-layer structure of PP/PE/PP), and a hydrocarbon based resin such as polyimide, aramid, or polyvinylidene fluoride-hexafluoropropylene (PVdF-HFP), or glass fiber.

The thickness of the microporous (microporous membrane) separator cannot be uniformly defined as it varies depending on use of application. For example, for an application in a secondary battery for driving a motor of an electric vehicle (EV), a hybrid electric vehicle (HEV), and a fuel cell vehicle (FCV), it is preferably 4 to 60 µm as a monolayer or a multilayer. Fine pore diameter of the microporous (microporous membrane) separator is preferably 1 µm or less at most (in general, the pore diameter is about several tens of nanometer).

As a non-woven separator, conventionally known ones such as cotton, rayon, acetate, nylon, polyester; polyolefin such as PP and PE; polyimide and aramid are used either singly or as a mixture. Furthermore, the volume density of a non-woven fabric is not particularly limited as long as sufficient battery characteristics are obtained with an impregnated polymer gel electrolyte. In addition, the thickness of a non-woven separator may be the same as an electrolyte layer, but preferably, 5 to 200 µm and more preferably 10 to 100 µm.

For the battery according to the present embodiment, an electrolyte may be maintained at the part of a separator to form an electrolyte layer, thereby constituting a single battery layer for a battery 10 illustrated in Fig. 1. The electrolyte constituting an electrolyte layer is not particularly limited, but a liquid electrolyte, and a polymer electrolyte such as a polymer gel electrolyte may be properly used. A means for maintaining an electrolyte at the part of a separator is not particularly limited, but for example, the means such as impregnation, application, and spraying may be applied.

The liquid electrolyte has a function as a lithium ion carrier. The liquid electrolyte has the form in which a lithium salt as a supporting salt is dissolved in an organic solvent as a plasticizer. Examples of the organic solvent which can be used include carbonates such as ethylene carbonate (EC), propylene carbonate (PC), dimethyl carbonate (DMC), diethyl carbonate (DEC), and ethylmethyl carbonate. Furthermore, as the lithium salt, the compound which can be added to an active material layer of an electrode such as Li(CF₃SO₂)₂N, Li(C₂F₅SO₂)₂N, LiPF₆, LiBF₄, LiClO₄, LiAsF₆, LiTaF₆, and LiCF₃SO₃ can be similarly used. The liquid electrolyte may further contain an additive in addition to the components that are described above. Specific examples of the compound include vinylene carbonate, methylvinylene carbonate, dimethylvinylene carbonate, phenylvinylene carbonate, diphenylvinylene carbonate, ethylvinylene carbonate, diethylvinylene carbonate, vinylethylene carbonate, 1,2-divinylethylene carbonate, 1-methyl-1-vinylethylene carbonate, 1-methyl-2-vinylethylene carbonate, 1-ethyl-1-vinylethylene carbonate, 1-ethyl-2-vinylethylene carbonate, vinylvinylene carbonate, allylethylene carbonate, vinyloxymethylethylene carbonate, allyloxymethylethylene carbonate, acryloxymethylethylene carbonate, methacryloxymethylethylene carbonate, ethynylethylene carbonate, propargylethylene carbonate, ethynyloxymethylethylene carbonate, propargyloxyethylene carbonate, methylene ethylene carbonate, and 1,1-dimethyl-2-methyleneethylene carbonate. Among them, vinylene carbonate, methylvinylene carbonate, and vinylethylene carbonate are preferable. Vinylene carbonate and vinylethylene carbonate are more preferable. Those cyclic carbonate esters may be used either singly or in combination of two or more types.

As a polymer electrolyte, a gel polymer electrolyte (gel electrolyte) including an electrolyte solution may be preferably used.

The gel polymer electrolyte has a constitution that the aforementioned liquid electrolyte is injected to a matrix polymer (host polymer) consisting of an ion conductive polymer. Using a gel polymer electrolyte as an electrolyte is excellent in that the fluidity of an electrolyte disappears and ion conductivity between each layer is blocked. Examples of an ion conductive polymer which is used as a matrix polymer (host polymer) include polyethylene oxide (PEO), polypropylene oxide (PPO), and a copolymer thereof. An electrolyte salt such as lithium salt can be dissolved well in those polyalkylene oxide polymers.

According to forming of a cross-linked structure, the matrix polymer of a gel electrolyte can exhibit excellent mechanical strength. For forming a cross-linked structure, it is sufficient to perform a polymerization treatment of a polymerizable polymer for forming a polymer electrolyte (for example, PEO and PPO), such as thermal polymerization, UV polymerization, radiation polymerization, and electron beam polymerization, by using a suitable polymerization initiator.

### [Positive electrode current collecting plate and negative electrode current collecting plate]

The material for forming the current collecting plate (25, 27) is not particularly limited, and a known highly conductive material which has been conventionally used for a current collecting plate for a lithium ion secondary battery can be used. Preferred examples of the material for forming a current collecting plate include metal material such as aluminum, copper, titanium, nickel, stainless steel (SUS) and an alloy thereof. From the viewpoint of light weightiness, resistance to corrosion, and high conductivity, aluminum and copper are preferable. Aluminum is particularly preferable. Meanwhile, the same material or a different material can be used for the positive electrode current collecting plate 27 and the negative electrode current collecting plate 25.

### [Positive electrode lead and negative electrode lead]

Further, although it is not illustrated, the current collector 11, 12 and the current collecting plate (25, 27) can be electrically connected to each other via a positive electrode lead or a negative electrode lead. The same material used for a lithium ion secondary battery of a related art can be also used as a material for forming a positive electrode lead and a negative electrode lead. Meanwhile, a portion led out from a casing is preferably coated with a heat resistant and insulating thermally shrunken tube or the like so that it has no influence on a product (for example, an automobile component; in particular, an electronic device or the like) by electric leak after contact with neighboring instruments or wirings.

### [Battery outer casing]

As for the battery outer casing 29, an envelope-shaped casing which is able to cover a power generating element and for which a laminate film including aluminum is used, may be used in addition to a known metal can casing. As for the laminate film, a laminate film with a three-layer structure formed by laminating PP, aluminum and nylon in this order may be used, but not limited thereto. From the viewpoint of having high output and excellent cooling performance, and of being suitably usable for a battery for a large instrument such as EV or HEV, a laminate film is preferable.

Recently, a large-sized battery is required for an automobile use and the like. The effect of the present invention that increases vibration resistance exhibits more effectively in the case of a large-area battery. Thus, in the present invention, the battery structure of which a power generating element is covered with an outer casing is preferably a large size in terms of further exhibiting the effect of the present invention. Specifically, it is preferable that a negative electrode active material layer has a rectangular shape, and the length of short side of the relevant rectangle be 100 mm or more. The large-sized battery may be used for a vehicle use. Herein, the length of short side of a negative electrode active material layer indicates the length of a shortest side in each of the electrodes. The upper limit of the length of the short side of the battery structure is, although not particularly limited, generally 250 mm or less.

It is also possible to define the large size of a battery in view of a relationship of battery area or battery capacity, from the viewpoint of a large-sized battery, which is different from the viewpoint of the physical size of an electrode. In the case of a flat stack type laminated battery according to the present invention, the value of the ratio of a battery area (the maximum value of projected area of a battery including an outer casing of a battery) to rated capacity is 5 cm²/Ah or more, and for the battery with 3 Ah or more of rated capacity, the battery area per unit capacity is large so that it is easy to be influenced by the residual stress generated by the expansion and shrinkage of a negative electrode active material layer, which comes with the charge and discharge of a battery. For this reason, the
problem of decreasing the performance of a battery (especially, vibration resistance) may occur more easily in the battery, in which an aqueous binder such as SBR is used for forming a negative electrode active material layer. Therefore, the non-aqueous electrolyte secondary battery according to the present embodiment is a large-sized battery as described above from the viewpoint of having a larger merit obtained from exhibition of the working effects of the present invention.

In addition, the aspect ratio of a rectangular electrode is preferably 1 to 1.25, and more preferably 1 to 1.1. Meanwhile, the aspect ratio of an electrode is defined by longitudinal/transversal ratio of a positive electrode active material layer with a rectangular shape. By having the aspect ratio in this range, there is an advantage in that it is possible to uniformly release stress in a surface direction, and thus, the effect by stress may be even more inhibited.

### [Group pressure applied to power generating element]

In the present embodiment, the group pressure applied to a power generating element of a flat laminated type battery is preferably 0.07 to 0.7 kgf/cm² (6.86 to 68.6 kPa). By being a flat laminated type battery, it is difficult to generate residual stress according to the expansion and shrinkage of an electrode as compared with a wound-typed battery, but when being within the above-described range, a current collector more easily follows the expansion and shrinkage of a negative electrode active material layer, and it is difficult to deform an electrode. For this reason, the binding property to a current collector and a negative electrode active material layer may be secured, and thus, the battery having high vibration resistance may be obtained. More preferably, the group pressure applied to a power generating element is 0.1 to 0.7 kgf/cm² (9.80 to 68.6 kPa). Herein, the group pressure indicates the external force that is added to a power generating element. The group pressure applied to a power generating element may be easily measured by using a film-style pressure distribution measurement system, and thus, the value measured by using the film-style pressure distribution measurement system manufactured by Tekscan, INC. is used in the present specification.

The controlling of the group pressure is not particularly limited, but the group pressure may be controlled by applying the external force physically and directly or indirectly to a power generating element, and then, controlling the external force. As for the method of applying the external force, a pressure member for applying pressure to an outer casing may be preferably used.

Fig. 3A is a top view of a non-aqueous electrolyte lithium ion secondary battery as one preferred embodiment of the present invention and Fig. 3B is a diagram seen from the arrow direction of A in Fig. 3A. The outer casing with the enclosed power generating element 1 has a flat rectangular shape, and the electrode tab 4 is drawn from the lateral side of the outer casing for extracting electric power. The power generating element is covered by the battery outer casing with its periphery fused by heat. The power generating element is sealed in a state in which the electrode tab 4 is led to the outside. Herein, the power generating element corresponds to the power generating element 21 of the lithium ion secondary battery 10 illustrated in Fig. 1 as described above. In Fig. 3, 2 represents a SUS plate as a pressure member, 3 represents a fixing jig as a fixing member, and 4 represents an electrode tab (negative electrode tab or positive electrode tab). The pressure member is disposed for the purpose of controlling the group pressure applied to power generating element to 0.07 to 0. 7 kgf/cm². Examples of the pressure member include a rubber material such as urethane rubber sheet, a metal plate such as aluminum and SUS, a resin film such as PP, and a heat-resistant resin sheet such as polyimide. Furthermore, from the viewpoint of having continuous application of constant pressure on a power generating element by a pressure member, it is preferable to have additionally a fixing member for fixing a pressure member. Furthermore, by controlling the fixing of a fixing jig onto a pressure member, the group pressure applied to a power generating element can be easily controlled.

Meanwhile, drawing of the tab illustrated in Fig. 3 is not particularly limited, either. The positive electrode tab and the negative electrode tab may be drawn from two lateral sides, or each of the positive electrode tab and negative electrode tab may be divided into plural tabs and drawn from each side, and thus it is not limited to the embodiment illustrated in Fig. 3.

In addition, the above-described non-aqueous electrolyte secondary battery may be manufactured by the manufacturing method that is conventionally known.

### [Assembled battery]

An assembled battery is formed by connecting plural batteries. Specifically, at least two of them are used in series, in parallel, or in series and parallel. According to arrangement in series or parallel, it becomes possible to freely control the capacity and voltage.

It is also possible to form a detachable small-size assembled battery by connecting plural batteries in series or in parallel. Furthermore, by connecting again plural detachable small-size assembled batteries in series or parallel, an assembled battery having high capacity and high output, which is suitable for a power source for operating a vehicle requiring high volume energy density and high volume output density or an auxiliary power source, can be formed. The number of the connected batteries for fabricating an assembled battery or the number of the stacks of a small-size assembled battery for fabricating an assembled battery with high capacity can be determined depending on the capacity or output of a battery of a vehicle (electric vehicle) for which the battery is loaded.

### [Vehicle]

The above-described non-aqueous electrolyte secondary battery and an assembled battery using the same have excellent output characteristics and can maintain discharge capacity even when it is used for a long period of time, and thus has good cycle characteristics. For use in a vehicle such as an electric vehicle, a hybrid electric vehicle, a fuel cell electric vehicle, or a hybrid fuel cell electric vehicle, long service life is required as well as high capacity and large size compared to use for an electric and mobile electronic device. The above-described non-aqueous electrolyte secondary battery and an assembled battery using the same can be preferably used as a power source for a vehicle, for example, as a power source for operating a vehicle or as an auxiliary power source.

Specifically, the battery or an assembled battery formed by combining plural batteries can be mounted on a vehicle. According to the present invention, a battery with excellent long term reliability, output characteristics, and long service life can be formed, and thus, by mounting this battery, a plug-in hybrid electric vehicle with long EV driving distance and an electric vehicle with long driving distance per charge can be achieved. That is because, when the battery or an assembled battery formed by combining plural batteries is used for, for example, a vehicle such as hybrid car, fuel cell electric car, and electric car (including two-wheel vehicle (motor bike) or three-wheel vehicle in addition to all four-wheel vehicles (automobile, truck, commercial vehicle such as bus, compact car, or the like)), a vehicle with long service life and high reliability can be provided. However, the use is not limited to a vehicle, and it can be applied to various power sources of other transportation means, for example, a moving object such as an electric train, and it can be also used as a power source for loading such as an uninterruptable power source device.

### Examples

A description will be made below in more detail in view of Examples and Comparative Examples, but the present invention is not limited to the Examples given below.

### 1. Production of battery

### (Production of positive electrode)

A solid composed of 85% by mass of LiMn₂O₄ (an average particle diameter: 15 µm) as a positive electrode active material, 5% by mass of acetylene black as a conductive aid, and 10% by mass of PVdF as a binder was prepared. With respect to the solid, a suitable amount of N-methyl-2-pyrrolidone (NMP) as a solvent for adjusting the viscosity of slurry was added to prepare the slurry of a positive electrode active material. Since then, the obtained slurry of a positive electrode active material was coated on both of the surfaces of an aluminum foil (20 µm) as a current collector, and dried. Since then, the pressing was carried out so as to be 60 µm of the thickness of the positive electrode active material layer with a single surface to prepare a positive electrode. Herein, the coating amount (basis weight) on the single surface was 25 mg/cm².

### (Production of negative electrode)

The solid composed of 90% by mass of a hard carbon (an average particle diameter: 10 µm) as a negative electrode active material, 2% by mass of SBR and 1% by mass of CMC as a binder, was prepared. With respect to the solid, a suitable amount of water as a solvent for adjusting the viscosity of slurry was added to prepare the slurry of a negative electrode active material. Since then, the obtained slurry of a negative electrode was coated on both of the surfaces of a copper foil (200 mm × 200 mm and thickness: 20 µm) as a current collector, and dried. Herein, the coating amount (basis weight) on the single surface was 8 mg/cm². Since then, the pressing was carried out so as to have 50 µm of the thickness of the negative electrode active material layer with a single surface to prepare a negative electrode. The density of the negative electrode active material layer thus obtained was 1.45 g/cm³.

### (Production of electrolyte solution)

A mixed solvent that was prepared by mixing ethylene carbonate (EC) and diethyl carbonate (DEC) in a volume ratio of 1 : 1 as a mixed ratio was used as a solvent. In addition, 1.0 M of LiPF₆ was used as a lithium salt. In addition, 2.0% by mass of vinylene carbonate with respect to 100% by mass of the total amount of the solvent and the lithium salt was added to prepare an electrolyte solution. In addition, "1.0 M of LiPF₆" means 1.0 M that is the concentration of lithium salt (LiPF₆) in the mixture of the relevant mixed solvent and lithium salt.

### (Process of completing battery)

The positive electrode and negative electrode that were obtained as described above were cut in predetermined sizes, respectively. The positive electrode and negative electrode were laminated by putting a separator (fine porous polyethylene film and thickness: 15 µm) therebetween to prepare a 15-layer laminate. A tab was welded to each of the positive electrode and negative electrode, the laminate was contained in an outer casing material composed of an aluminum laminate film, one side of four sides of the laminate was opened, an electrolyte solution was injected into the opened side, and then, the opened side through which the electrolyte solution was injected was sealed by a vacuum suction.

### 2. Evaluation of battery

### (Charge and discharge performance test)

As a charge and discharge performance test, the performance test was performed after the temperature of a battery was set to be 45°C in a constant-temperature bath that was maintained at 45°C. A constant current (CC) charge was performed by 4.2 V at a current rate of 1 C, and then, charge was performed with a constant voltage (CV), for 2.5 hours in total. Since then, after setting a resting time for 10 minutes, the discharge was performed by 2.5 V with a current rate of 1 C, and then, the resting time was set for 10 minutes. The above process was set as one cycle to perform the charge and discharge test to obtain discharge capacity per first time (initial capacity).

### (Internal resistance of battery)

The internal resistance of a battery was measured as follows.

After completing the first charge and discharge, when the charge was performed with a constant current (current: 220 mA (1 CA)) for 30 minutes, direct-current resistance was measured. For measuring the direct-current resistance, the resistance value was calculated from a cell voltage change ΔV and a current value after discharge for 30 seconds.

### (Peeling strength)

The peeling strength was measured based on JISK6854-1 (Adhesive-peeling adhesion strength test method- Part 1: 90° peeling). As a sample, a negative electrode active material layer was coated, dried, and pressed to prepare a negative electrode. Since then, the negative electrode was cut to have the size of 20 mm × 100 mm, and then, used.

### (Young's modulus)

The negative electrode active material layer was coated on both of the surfaces of a current collector, dried, and then, pressed to prepare a negative electrode. A sample with the size of 150 mm × 10 mm was prepared using the negative electrode. Young's modulus was measured by a tension tester based on JIS2280 (high temperature Young's modulus test method of metal material).

### (Example 1)

The batteries were manufactured by changing the ratio (long side/short side) of a length of long side to a length of short side of a negative electrode active material layer as listed to the following Table 1. The 90° peeling strength of the negative electrode active material layer from a negative electrode current collector in a negative electrode and the direct-current resistance were measured. The results are listed in the following Table 1 and illustrated in Fig. 4. The values of the 90° peeling strength and direct-current resistance were represented by relative values when the values obtained from Example1-1 and Example 1-3 were set to be 1, respectively.

The lengths of long side and short side of the negative electrode active material layer of the batteries manufactured from Example 1 was manufactured to be the ratio of the long side/short side as listed in the following Table 1. The content of an aqueous binder, the density of a negative electrode active material layer, and the Young's modulus of a negative electrode are respectively the same as follows.

Content of binder in negative electrode active material: 3.0% by mass (SBR : CMC = 2 : 1 (mass ratio))
Density of active material layer: 1.45 g/cm³
Young's modulus of negative electrode: 1.2 GPa

The rated capacity (cell capacity and initial capacity) of the battery manufactured as described above, and the ratio of the battery area (projected area of the battery including an outer casing of the battery) to the rated capacity are the same as listed in Table 1.

### [Table 1]

**Table 1**

| | Long side/short side | 90° peeling strength (relative value) | Direct-current resistance (relative value) | Initial capacity (Ah) | Size of negative electrode (mm) Size of positive electrode (mm) | Ratio of battery area to rated capacity (cm² / Ah) | Initial capacity (relative value) |
|---|---|---|---|---|---|---|---|
| Example 1-1 | 1.0 | 1 | 1.004 | 27.4 | 200×200 | 18.6 | 0.99 |
| | | | | | 196×196 | | |
| Example 1-2 | 1.1 | 1 | 1.015 | 26.46 | 207×187 | 18.6 | 0.98 |
| | | | | | 202×184 | | |
| Example 1-3 | 1.11 | 1 | 1 | 27 | 210×188 | 18.6 | 1 |
| | | | | | 205×185 | | |
| Example 1-4 | 1.25 | 1 | 1.014 | 26.46 | 220×176 | 18.6 | 0.98 |
| | | | | | 215×172 | | |
| Comparative Example 1-5 | 1.397 | 0.983 | 1.085 | 25.92 | 231×165 | 18.6 | 0.96 |
| | | | | | 226×161 | | |

From the results in the above Table 1 and Fig. 4, it could be confirmed that when the ratio of the length of long side to the length of short side of a negative electrode active material layer was within the range of 1 to 1.25, high peeling strength could be obtained, and thus, the resistance was small. It could be considered that this was because the stress was easily released into the surrounding area thereof by setting the ratio of the length of long side to the length of short side of a negative electrode active material layer to be 1 to 1.25, thereby inhibiting the decrease in peeling strength by the generation of residual stress. In addition, the increase in resistance by the generation of residual stress could be inhibited.

### (Example 2)

The batteries were manufactured by changing the contents of an aqueous binder in a negative electrode active material layer as described below. The 90° peeling strength, direct-current resistance, and initial capacity thereof were measured. For all of them, the ratio of SBR : CMC in an aqueous binder was set to be 2 : 1 (mass ratio). The results are listed in Table 2 and illustrated in Fig. 5. The values of the 90° peeling strength and initial capacity were represented by the relative values when the values obtained from Example 2-2 were set to be 1, respectively. The value of direct-current resistance was represented by the relative value when the value obtained from Example 2-6 was set to be 1.

The lengths of long side and short side of the negative electrode active material layer, the density of the negative electrode active material layer, and the Young's modulus of the negative electrode of the batteries manufactured from Example 2 were the same as follows. Other conditions were the same.

Lengths of long side and short side of negative electrode active material layer: 200 × 200 mm
Content of binder in negative electrode active material: 3.0% by mass
Density of active material layer: 1.45 g/cm³
Young's modulus of negative electrode: 1.2 GPa

The rated capacity (cell capacity and initial capacity) of the battery manufactured as described above, and the ratio of the battery area (projected area of the battery including an outer casing of the battery) to the rated capacity are the same as listed in Table 2.

### [Table 2]

**Table 2**

| | Content of binder (% by mass) | 90° peeling strength (relative value) | Direct-current resistance (relative value) | Initial capacity (Ah) | Ratio of battery area to rated capacity (cm² / Ah) | Initial capacity (relative value) |
|---|---|---|---|---|---|---|
| Comparative Example 2-1 | 1.603 | 0.792 | 1.075 | 27.4 | 18.6 | 1.001 |
| Example 2-2 | 2.0 | 1 | 1.032 | 27.4 | 18.6 | 1 |
| Example 2-3 | 2.5 | 1.268 | 1.018 | 27.0 | 18.8 | 0.986 |
| Example 2-4 | 3.0 | 1.502 | 1.012 | 26.96 | 18.9 | 0.984 |
| Example 2-5 | 3.5 | 1.732 | 1.006 | 26.8 | 18.9 | 0.978 |
| Example 2-6 | 4.0 | 2.0 | 1 | 26.4 | 19.3 | 0.962 |
| Comparative Example 2-7 | 4.4 | 2.091 | 0.994 | 25.1 | 20.2 | 0.917 |

From the results in the above Table 2 and Fig. 5, it could be confirmed that the peeling strength was high, the resistance became low, and thus, it could be possible to secure the binding property of the negative electrode by setting the content of an aqueous binder in the negative electrode active material layer to be 2% by mass or more. In addition, it could be confirmed that the battery having high capacity could be obtained and the performance of the battery could be maintained, by setting the content of the aqueous binder to be 4% by mass or less.

### (Example 3)

The batteries were manufactured by changing the Young's modulus of the negative electrode as described below, and then, the 90° peeling strength, direct-current resistance, and initial capacity were measured. The results are listed in the following Table 3 and illustrated in Fig. 6. The values of 90° peeling strength and initial capacity were represented by the relative values when the values obtained from Example 3-2 were set to be 1, respectively.

The value of direct-current resistance was represented by the relative value.

The lengths of long side and short side of the negative electrode active material layer, the density of the negative electrode active material layer, and the Young's modulus of the negative electrode of the batteries manufactured from Example 3 were respectively the same as follows. In addition, the Young's modulus was adjusted by changing the cross-sectional area of the electrode.

Lengths of long side and short side of negative electrode active material layer: the same as listed in the following Table 3
Content of binder in negative electrode active material: 3.0% by mass (SBR : CMC = 2 : 1 (mass ratio))
Density of active material layer: 1.45 g/cm³

Other conditions were the same.

The rated capacity (cell capacity and initial capacity) of the battery manufactured as described above, and the ratio of the battery area (projected area of the battery including an outer casing of the battery) to the rated capacity are the same as listed in Table 3.

### [Table 3]

**Table 3**

| | Young's modulus (GPa) | 90° peeling strength (relative value) | Direct-current resistance (relative value) | Initial capacity (Ah) | Cross-sectional area of negative electrode (relative value) | Size of negative electrode (mm) Size of positive electrode (mm) | Ratio of battery area to rated capacity (cm² / Ah) | Initial capacity (relative value) |
|---|---|---|---|---|---|---|---|---|
| Comparative Example 3-1 | 0.922 | 0.795 | 1.075 | 29.6 | 1.08 | 209×208 | 18.4 | 1.08 |
| | | | | | | 204×204 | | |
| Example 3-2 | 1.0 | 1 | 1.032 | 27.4 | 1 | 200×200 | 18.6 | 1 |
| | | | | | | 196×196 | | |
| Example 3-3 | 1.1 | 1.252 | 1.018 | 24.9 | 0.909 | 191×191 | 18.8 | 0.909 |
| | | | | | | 187×187 | | |
| Example 3-4 | 1.2 | 1.502 | 1.012 | 22.8 | 0.833 | 183×183 | 19.0 | 0.832 |
| | | | | | | 179×179 | | |
| Example 3-5 | 1.3 | 1.744 | 1.006 | 21.1 | 0.769 | 176×176 | 19.3 | 0.77 |
| | | | | | | 172×172 | | |
| Example 3-6 | 1.4 | 2.0 | 0.994 | 19.6 | 0.714 | 170×169 | 19.5 | 0.715 |
| | | | | | | 166×166 | | |
| Example 3-7 | 1.48 | 2.227 | 0.984 | 18.5 | 0.676 | 165×164 | 19.6 | 0.675 |
| | | | | | | 161×161 | | |

From the results in the above Table 3 and Fig. 6, it could be noted that the decrease in peeling strength was inhibited and the increase in resistance was inhibited by setting the Young's modulus of the negative electrode to be 1.0 GPa or more. In addition, by setting the Young's modulus of the negative electrode to be 1.4 GPa or less, the decrease in the penetrability of electrolyte solution due to an increase in the number of cross-linking points of the aqueous binder was inhibited, and thus, the battery with high initial capacity could be obtained.

### (Example 4)

The batteries were manufactured by changing the density of the negative electrode as described below, and then, the 90° peeling strength, direct-current resistance, and initial capacity thereof were measured. The results are listed in the following Table 4 and illustrated in Fig. 7. The values of 90° peeling strength, direct-current resistance, and initial capacity were represented by the relative values when the values obtained from Example 4-4, Example 4-5, and Example 4-2 were set to be 1, respectively.

The lengths of long side and short side of the negative electrode active material layer, the density of the negative electrode active material layer, and the Young's modulus of the negative electrode of the batteries manufactured from Example 4 were respectively the same as follows.

Lengths of long side and short side of negative electrode active material layer: 200 × 200 mm
Content of binder in negative electrode active material: 3.0% by mass (SBR : CMC = 2 : 1 (mass ratio))
Young's modulus of negative electrode: 1.2 GPa

Other conditions were the same.

The rated capacity (cell capacity and initial capacity) of the battery manufactured as described above, and the ratio of the battery area (projected area of the battery including an outer casing of the battery) to the rated capacity are the same as listed in Table 4.

### [Table 4]

**Table 4**

| | Density (g / cm³) | 90° peeling strength (relative value) | Direct-current resistance (relative value) | Initial capacity (Ah) | Ratio of battery area to rated capacity (cm² / Ah) | Initial capacity (relative value) |
|---|---|---|---|---|---|---|
| Comparative Example 4-1 | 1.361 | 0.803 | 1.091 | 27.4 | 18.6 | 1.001 |
| Example 4-2 | 1.4 | 0.857 | 1.038 | 27.4 | 18.6 | 1 |
| Example 4-3 | 1.45 | 0.933 | 1.016 | 27.3 | 18.6 | 0.995 |
| Example 4-4 | 1.5 | 1 | 1.007 | 27.1 | 18.8 | 0.989 |
| Example 4-5 | 1.55 | 1.156 | 1 | 26.9 | 18.9 | 0.983 |
| Example 4-6 | 1.6 | 1.338 | 0.998 | 26.5 | 19.2 | 0.967 |
| Example 4-7 | 1.64 | 1.7 | 0.996 | 24.6 | 20.7 | 0.898 |

From the results in the above Table 4 and Fig. 7, it could be confirmed that by setting the density of the negative electrode active material layer to be 1.4 g/cm³ or more, the decrease in peeling strength was inhibited, and thus, the increase in resistance was inhibited. In addition, by setting the density of the negative electrode active material layer to be 1.6 g/cm³ or less, the decrease in the penetrability of an electrolyte solution was inhibited, and thus, the battery with high initial capacity could be obtained.

### Reference Signs List

- 1: Outer casing with enclosed power generating element
- 2: Pressure member
- 3: Fixing member
- 4: Electrode tab
- 10: Lithium ion secondary battery
- 11: Negative electrode current collector
- 12: Positive electrode current collector
- 13: Negative electrode active material layer
- 15: Positive electrode active material layer
- 17: Separator
- 19: Single battery layer
- 21: Power generating element
- 25: Negative electrode current collecting plate
- 27: Positive electrode current collecting plate
- 29: Battery outer casing material
- a: Long side
- b: Short side

## Claims

1. A flat laminated type non-aqueous electrolyte secondary battery having a power generating element comprising:
a positive electrode obtained by forming a positive electrode active material layer on a surface of a positive electrode current collector;
a negative electrode obtained by forming a negative electrode active material layer having a rectangular shape on a surface of a negative electrode current collector; and
a separator,
**characterized in that**:
the negative electrode active material layer comprises 2 to 4% by mass of an aqueous binder with respect to the total mass of the negative electrode active material layer,
a ratio of a length of long side to a length of short side of the rectangular shape is 1 to 1.25,
a Young's modulus of the negative electrode is 1.0 to 1.4 GPa,
a density of the negative electrode active material layer is 1.4 to 1.6 g/cm³, and
a ratio of a battery area, projected area of the battery including an outer casing of the battery, to rated capacity is 5 cm²/Ah or more and the rated capacity is 3 Ah or more.

2. The non-aqueous electrolyte secondary battery according to claim 1, wherein the length of short side of the negative electrode active material layer is 100 mm or more.

3. The non-aqueous electrolyte secondary battery according to claim 1 or 2, wherein the aqueous binder comprises at least one rubber-based binder selected from the group consisting of a styrene-butadiene rubber, an acrylonitrile-butadiene rubber, a methyl methacrylate-butadiene rubber, and a methyl methacrylate rubber.

4. The non-aqueous electrolyte secondary battery according to claim 3, wherein the aqueous binder comprises a styrene-butadiene rubber.

## Patentansprüche

1. Flache Sekundärbatterie vom laminierten Typ mit nicht-wässrigem Elektrolyten, die ein Strom erzeugendes Element aufweist, umfassend:
eine positive Elektrode, die durch Bilden einer Aktivmaterialschicht der positiven Elektrode auf einer Oberfläche eines Stromabnehmers der positiven Elektrode erhalten wird;
eine negative Elektrode, die durch Bilden einer Aktivmaterialschicht der negativen Elektrode mit einer rechteckigen Form auf einer Oberfläche eines Stromabnehmers der negativen Elektrode erhalten wird; und
einen Separator,
**dadurch gekennzeichnet, dass**:
die Aktivmaterialschicht der negativen Elektrode 2 bis 4 Massenprozent eines wässrigen Bindemittels, bezogen auf die Gesamtmasse der Aktivmaterialschicht der negativen Elektrode, umfasst,
ein Verhältnis einer Länge der langen Seite zu einer Länge der kurzen Seite der rechteckigen Form 1 bis 1,25 beträgt,
ein Youngscher Modul der negativen Elektrode 1,0 bis 1,4 GPa beträgt,
eine Dichte der Aktivmaterialschicht der negativen Elektrode 1,4 bis 1,6 g/cm³ beträgt, und
ein Verhältnis einer Batteriefläche, projizierten Fläche der Batterie einschließlich eines Außengehäuses der Batterie, zur Nennleistung 5 cm²/Ah oder mehr beträgt und die Nennleistung 3 Ah oder mehr beträgt.

2. Sekundärbatterie mit nicht-wässrigem Elektrolyten gemäß Anspruch 1, wobei die Länge der kurzen Seite der Aktivmaterialschicht der negativen Elektrode 100 mm oder mehr beträgt.

3. Sekundärbatterie mit nicht-wässrigem Elektrolyten gemäß Anspruch 1 oder 2, wobei das wässrige Bindemittel wenigstens ein Bindemittel auf Kautschukbasis, ausgewählt aus der Gruppe bestehend aus einem Styrol-Butadien-Kautschuk, einem Acrylnitril-Butadien-Kautschuk, einem Methylmethacrylat-Butadien-Kautschuk und einem Methylmethacrylat-Kautschuk, umfasst.

4. Sekundärbatterie mit nicht-wässrigem Elektrolyten gemäß Anspruch 3, wobei das wässrige Bindemittel einen Styrol-Butadien-Kautschuk umfasst.

## Revendications

1. Batterie secondaire de type stratifié plat à électrolyte non aqueux ayant un élément de génération de puissance comprenant:
une électrode positive obtenue par la formation d'une couche de matériau actif à électrode positive sur une surface d'un collecteur de courant à électrode positive;
une électrode négative obtenue par la formation d'une couche de matériau actif à électrode négative de forme rectangulaire sur une surface d'un collecteur de courant à électrode négative; et
un séparateur,
**caractérisé en ce que**:
la couche de matériau actif à électrode négative comprend 2 à 4% en masse d'un liant aqueux par rapport à la masse totale de la couche de matériau actif à électrode négative,
un rapport d'une longueur de côté long à une longueur de côté court de la forme rectangulaire est de 1 à 1,25,
un module de Young de l'électrode négative est compris entre 1,0 et 1,4 GPa,
une masse volumique de la couche de matériau actif à électrode négative est comprise entre 1,4 et 1,6 g/cm³
et
un rapport d'une zone de surface projetée de la batterie comprenant un boîtier externe de la batterie, à la capacité nominale est de 5 cm²/Ah ou plus, et la capacité nominale est de 3 Ah ou plus.

2. Batterie secondaire à électrolyte non aqueux selon la revendication 1, dans laquelle la longueur du côté court de la couche de matériau actif à électrode négative est de 100 mm ou plus.

3. Batterie secondaire à électrolyte non aqueux selon la revendication 1 ou la revendication 2, dans laquelle le liant aqueux comprenant au moins un liant à base de caoutchouc choisi dans le groupe composé d'un caoutchouc styrène-butadiène, d'un caoutchouc acrylonitrile-butadiène, d'un méthyle un caoutchouc de méthacrylate-butadiène et d'un caoutchouc de méthacrylate de méthyle.

4. Batterie secondaire à électrolyte non aqueux selon la revendication 3, dans laquelle le liant aqueux comprend un caoutchouc styrène-butadiène.
